# FASCICULE DE BREVET EUROPEEN

(11) **EP 1 632 140 B1**
(45) Date de publication et mention de la délivrance du brevet: **18.09.2013**
(21) Numéro de dépôt: 05370022.5
(22) Date de dépôt: 01.08.2005
(51) Int. Cl.: A23B 7/04, A23L 3/015

(54) **Procédé pour la préparation et conservation de produits tels que des denrées et/ou de produits biologiques**
Verfahren zur Herstellung und Konservierung von Produkten wie Lebensmittel und/oder biologische Produkte
Process for the preparation and conservation of products such as food and/or biological products

(30) Priorité: 02.08.2004 FR 0408524
(43) Date de publication de la demande: 08.03.2006
(73) Titulaire: Bonduelle Société Anonyme, 59173 Renescure (FR)
(72) Inventeur: Maureaux, Alain, 57173 Renescure (FR); Baranowski, Eric, 57173 Renescure (FR); Luchini, Francois, 57173 Renescure (FR)
(74) Mandataire: Boubal, Denis Henri Jacques

(56) Documents cités:
- GB-A- 952 658
- US-A- 3 219 463
- US-A- 3 293 046
- US-A1- 2002 184 897
- DATABASE EPODOC EUROPEAN PATENT OFFICE, THE HAGUE, NL; XP002320647 & CN 1 416 735 A (SHANGHAI COLLEGE OF APPLIED TECHNOLOGY) 14 mai 2003 (2003-05-14)

## Description

L'invention concerne un procédé de préparation et de conservation de denrées et/ou de produits biologiques, ainsi qu'une installation conçue pour la mise en oeuvre du procédé.

Il est à noter que ce procédé de préparation et de conservation de denrées présente l'avantage de pouvoir être appliqué à tous les produits contenant de l'eau libre, tels que des produits liquides et/ou pâteux et/ou visqueux et/ou solides et/ou feuillus alimentaires, tels que notamment des purées, des épinards hachés, des feuilles d'épinards, des produits en sauce, es produits en morceaux, tels que des rondelles de courgettes, dés de poivrons, etc.

Traditionnellement, dans le domaine de la préparation et conservation de denrées, il est connu d'effectuer, dans un premier temps, une cuisson des produits alimentaires, qui sont ensuite par exemple broyés, afin de former une purée, pour être enfin congelés.

Toutefois, un tel procédé aboutissant à la congélation des denrées et/ou produits biologiques présente certains inconvénients.

Tout d'abord, ladite congélation, dite classique, est lente à mettre en oeuvre puisqu'elle nécessite très souvent plusieurs dizaines de minutes, et est donc peu efficace sur le plan du temps, énergétique, et qualité organoleptique. Cette surgélation s'effectue par contact ou échange convectif avec de l'air refroidi par évaporation de fluide frigorigène.

Par ailleurs, selon les procédés actuellement utilisés, les produits, après une première surgélation en gros volume, sont stockés en chambre froide avant d'être remontés en température et broyés afin d'être mis en forme et surgelés de façon définitive.

De tels procédés peuvent porter préjudice aux produits alimentaires, tant sur le plan de la structure que gustatif, et nécessitent un temps de préparation long ainsi qu'une énergie importante.

Le document CN 1.416.735 concerne un procédé de lyophilisation qui conduit à une dessication quasi complète du produit traité.

Le document GB 952.658 a trait à la préservation de produits alimentaires liquides ou semi liquides, en particulier de la crème.

Le procédé comprend une première étape de refroidissement sous le point de congélation en introduisant le produit dans une chambre sous vide, par atomisation. En fin de première étape, la température peut être comprise entre -4°C et -10°C. Une deuxième étape de refroidissement peut permettre de refroidir les produits jusqu'à -20°C. La première étape de refroidissement sous vide est réalisée sur une période de l'ordre de 1 mois, voire plus.

Le document US 3.219.463 a trait à un procédé de congélation en deux étapes. La première étape est une étape de déshydratation par mise sous vide des produits. Lors de cette étape, la température des produits est maintenue juste au dessus du point de congélation. La deuxième étape du procédé permet alors de passer rapidement en dessous du point de congélation des produits.

Le but de la présente invention est de proposer un procédé de préparation et de conservation de denrées alimentaires et/ou de produits biologiques, qui pallie les inconvénients précités, notamment au niveau du temps de congélation et de la préservation des qualités organoleptiques, telles que la texture, la couleur et l'arôme.

Un autre but de l'invention est de proposer une installation conçue pour la mise en oeuvre dudit procédé, qui permette d'aboutir à un bilan énergétique avantageux, notamment par un abaissement de l'énergie consommée et par une récupération d'énergie maîtrisée, par rapport aux installations connues. Ce type de procédé est rapide, voire instantané.

D'autres buts et avantages de l'invention apparaîtront au cours de la description qui va suivre, qui n'est donnée qu'à titre indicatif, et qui n'a pas pour but de la limiter.

Selon la présente invention, le procédé de surgélation de produits, tels que des denrées et/ou des produits biologiques, contenant de l'eau libre, tels que des produits liquides et/ou pâteux et/ou visqueux et/ou solides dispersés et/ou feuilles alimentaires, tels que notamment des purées, des épinards hachés, des feuilles d'épinards, des produits en sauce, et/ou des produits en morceaux, est caractérisé par le fait qu'on effectue au moins une étape de refroidissement en continu dudit produit à traiter pendant un temps donné et sous un vide donné, au cours de laquelle l'évaporation de l'eau libre dudit produit conduit à une pré-surgélation dudit produit, avec maîtrise du pourcentage d'eau congelée suivie d'une deuxième étape de surgélation, conduisant à une surgélation totale, ladite étape de pré-surgélation étant effectuée à une pression entre 1 et 4 millibars et pendant 10 à 300 secondes.

L'invention sera mieux comprise à la lecture de la description suivante accompagnée des dessins en annexe parmi lesquels :
- la figure 1 illustre un organigramme des différentes étapes d'un mode de réalisation du procédé selon l'invention,
- la figure 2 représente schématiquement une installation de refroidissement au point de congélation selon un premier mode de réalisation de l'invention,
- la figure 3 représente schématiquement une installation de refroidissement au point de congélation, selon un second mode de réalisation de l'invention pour les produits feuillus et/ou pâteux.

L'invention concerne tout d'abord un procédé de traitement de produits, tels que des denrées et/ou des produits biologiques, contenant de l'eau libre, tels que des produits liquides et/ou pâteux et/ou visqueux et/ou solides dispersés et/ou feuillus alimentaires, tels que notamment des purées, des épinards hachés, des feuilles d'épinards, des produits en sauce, et/ou des produits en morceaux, tels que des rondelles de courgettes, dès de poivrons, etc.

Selon l'invention, on effectue au moins une étape de refroidissement dudit produit sous vide, au cours de laquelle l'évaporation de l'eau libre dudit produit conduit à une baisse de température dudit produit.

Plus particulièrement, on effectue au moins une étape de refroidissement en continu dudit produit à traiter pendant un temps donné et sous un vide donné, au cours de laquelle ladite évaporation de l'eau libre dudit produit conduit au moins à une pré-surgélation dudit produit, avec maîtrise du pourcentage d'eau congelée ;

Par refroidissement, il faut comprendre un processus qui consiste à abaisser la température de la denrée alimentaire et/ou du produit biologique de manière à favoriser sa conservation, c'est-à-dire à une température qui peut être comprise entre 20 °C et une température pouvant aller jusqu'à au moins - 18 °C au coeur du produit.

Un tel procédé abaissant la température à au moins -18 °C est généralement appelé congélation, ou surgélation si celui-ci met en oeuvre un abaissement très rapide, de l'ordre de cinq minutes, de la température à coeur.

Ce procédé peut être appliqué à tous les produits contenant de l'eau libre, tels que les épinards hachés, les purées, les sauces, les produits feuillus et biologiques, etc.

Par eau libre, on entend l'eau non liée aux molécules ou particules hydrophiles dans les tissus organiques, et, donc, d'élimination facile. L'eau libre se congèle normalement à 0 °C.

Un avantage du procédé, selon la présente invention, est de ne pas détériorer la structure des parois végétales des produits utilisés.

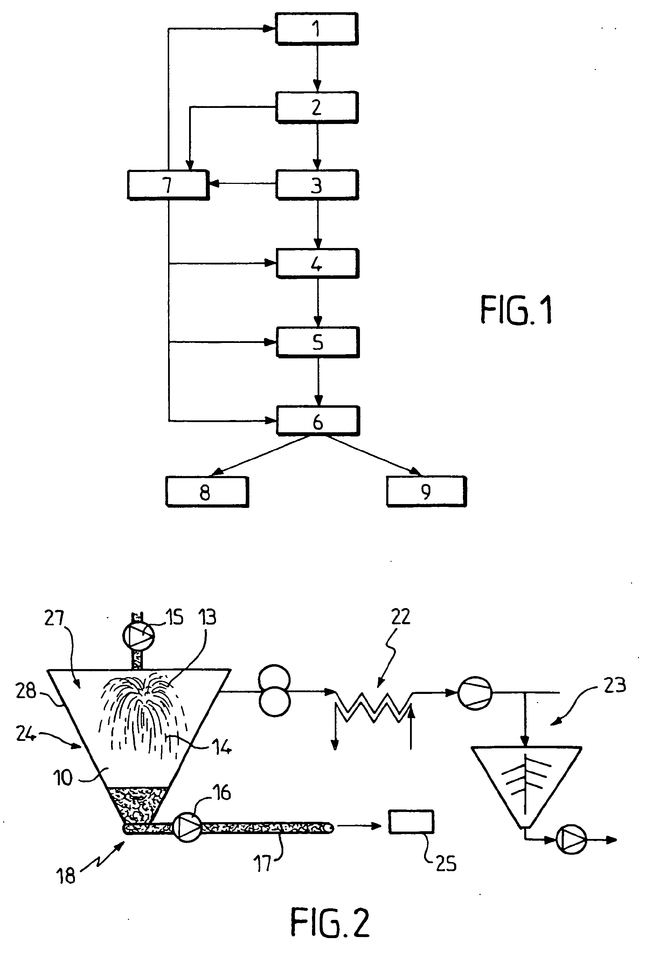

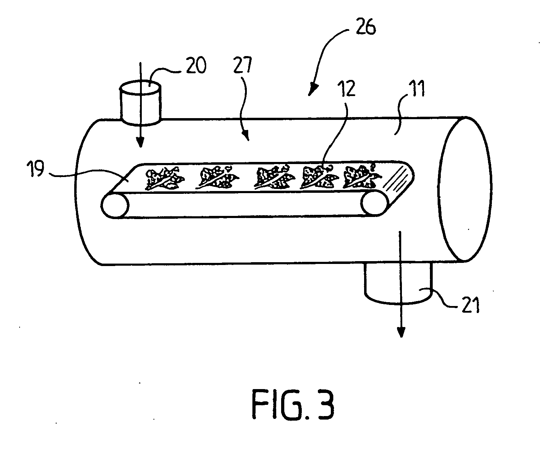

Telles qu'illustrées aux figures 1, 2 et 3, les denrées à mettre en forme et à surgeler sont, dans une première étape de traitement, repérées 1 à la figure 1, cuisinées ou à l'état naturel, s'agissant de produits biologiques, puis broyées, avant d'être placées dans une enceinte 10 ou 11, telle qu'illustrée aux figures 2 et 3 où l'on applique un vide poussé.

Avec une pression à l'intérieur de l'enceinte 10 ou 11 réduite, la température d'évaporation de l'eau baisse. Au fur et à mesure que l'eau des denrées se vaporise dans l'enceinte 10 ou 11, elle prend de l'énergie, dans un procédé appelé endothermique, et les denrées se refroidissent.

Il est aussi tout à fait envisageable de prévoir l'utilisation de denrées obtenues à partir de produits feuillus. Dans ce cas, l'étape 1, telle qu'illustrée à la figure 1, n'est pas réalisée, et les denrées 12 sont placées directement dans une enceinte 11 sous vide, comme montré à la figure 3.

Selon un mode particulier de la présente invention, ladite étape de refroidissement en continu pendant un temps donné et sous un vide donné conduit à un refroidissement rapide desdits produits, voire à une surgélation totale.

Ainsi, selon la mise en oeuvre des paramètres de refroidissement, et selon les produits à traiter, on peut obtenir soit une pré-surgélation rapide ou encore dénommée « flash », soit arriver à une surgélation rapide, ou « flash » totale, avec maîtrise du pourcentage d'eau congelée.

Comme montré à la figure 1, notamment pour les produits chauds, dont la recette, dans une première étape 1, est effectuée par exemple à une température supérieure à 70°C, il peut être nécessaire de réaliser l'étape de pré-refroidissement, repérée 2 à la figure 1, à un vide intermédiaire. Cette étape permet donc de refroidir la denrée avant de l'envoyer dans un vide plus poussé dans une étape de pré-surgélation 3 et/ou de surgélation suivante.

Par ailleurs, cette étape 2 de pré-refroidissement présente aussi l'avantage de retirer l'air inclus dans les denrées lors de l'étape de traitement 1, et ainsi de récupérer les arômes dans une étape, repérée 7 à la figure 1, qui peuvent être recyclés dans la suite du procédé, de,même pour la récupération d'énergie.

Selon une variante de la présente invention, on effectue au moins une première étape 3 de refroidissement sous vide aboutissant à une pré-surgélation dudit produit, suivie d'une deuxième étape 6 de surgélation. L'étape 6 de surgélation peut être effectuée sous vide ou non. Ladite étape de refroidissement en continu 3, 6 conduit à une surgélation 6 totale.

Selon un mode particulier de la présente invention, les denrées sont obtenues à partir d'une purée d'au moins un produit alimentaire, et/ou produit feuillu, et/ou produit biologique à eau libre.

Il est à remarquer que l'on a obtenu de bons résultats, selon un mode avantageux de réalisation, dans lequel l'étape de refroidissement 3 est réalisée entre 1 et 6 millibars, et plus précisément entre 3 et 4 millibars, et l'étape de refroidissement 2 est réalisée entre 6 et 100 millibars, et plus précisément à 30 millibars.

L'application d'un vide entre 3 et 4 millibars permet d'évaporer l'eau libre entre -2°C et -10°C. L'évaporation de 10 à 15% de l'eau libre du produit permet d'arriver à une denrée au point de congélation.

L'application d'un vide à 30 millibars permet d'évaporer l'eau à 25°C.

Après les étapes de refroidissement 2 et 3, telles qu'illustrées à la figure 1, on réalise une étape de refroidissement 6 qui conduit à l'obtention d'un produit à au moins - 18 °C, avant de conditionner les denrées dans une étape, repérée 8, prête à être commercialisée ou de les stocker en vrac dans une étape repérée 9.

Selon un mode particulier de la présente invention, avant l'étape de surgélation 6 sous vide ou non, on peut effectuer des adjonctions de morceaux surgelés et/ou d'ingrédients ou denrées.

L'ajout de morceaux surgelés ou ingrédients est par exemple effectué dans une étape, repérée 4 à la figure 1, quand le produit est à son point de congélation, et donc avant sa mise en forme dans une étape, repérée 5 à la figure 1.

Par ailleurs, on peut effectuer la mise en forme de denrées alimentaires après l'étape de pré-surgélation 3 et avant l'étape de surgélation 6 classique ou sous vide.

Les produits végétaux prennent, à leur point de congélation, une viscosité suffisante pour être mis en forme ou extrudés et coupés en continu.

Par ailleurs, au point de congélation, les denrées ont une texture et une viscosité qui leur permettent de se maintenir en forme avant la surgélation 6 finale.

La mise en forme lors de l'étape 5, peut être réalisée par formage et/ou extrusion, par des moyens de pression et/ou par moulage.

Selon un mode particulier de la présente invention, pendant l'étape 3 de pré-surgélation, on pulvérise les produits à traiter permettant leur atomisation afin de faciliter l'évaporation de l'eau libre, et de diminuer le temps de traitement.

A titre d'exemple, non limitatif, on pulvérise les produits à traiter sous forme de gouttes ou particules de 0,3 à 3 mm.

Le pourcentage d'eau libre retirée aux denrées peut être facilité par la réduction des denrées en fines particules par atomisation. Plus les particules de denrées sont petites, plus l'évaporation d'eau est rapide et la congélation devient plus efficace.

Le pourcentage d'eau libre retirée aux denrées dépend également de l'épaisseur des denrées. A titre d'exemple, non limitatif, les denrées se présentent en couche d'une épaisseur entre 5 et 30 mm.

Selon la présente invention, la pré-surgélation et/ou la surgélation sont effectuées à une pression entre 1 et 4 millibars et pendant 10 à 300 secondes.

A titre d'exemple non limitatif, on a obtenu des bons résultats avec des produits visqueux, tels que des purées ou des épinards hachés, utilisant une pression entre 3 et 4 millibars pendant 10 à 180 secondes, atteignant une température entre -3 et -4°C.

Par produits visqueux on entend tout produit pâteux apte à être pompé.

On a obtenu également de bon résultats avec des produits feuillus entiers utilisant une pression entre 4 et 5 millibars pendant 10 à 180 secondes atteignant une température entre -0,5 et -2°C, et avec des produits extrudés, tels que des pommes duchesse, utilisant une pression de 1 millibar pendant 60 à 300 secondes, atteignant une température de -18°C.

La présente invention concerne aussi une installation pour la préparation et la conservation de produits, tels que des denrées et/ou des produits biologiques contenant de l'eau libre, conçue pour la mise en oeuvre du procédé décrit plus haut. Elle est constituée d'une enceinte 10, 11 comprenant au moins un poste 24, 26 équipé de moyens 27 de refroidissement en continu sous vide.

En particulier, l'installation, selon la présente invention, est utilisée pour des produits, tels que des produits liquides et/ou pâteux et/ou visqueux et/ou solide dispersés et/ou feuillus alimentaires, tels que notamment des purées, des épinards hachés, des feuilles d'épinards, des produits en sauce; et/ou des produits en morceaux, et elle comprend au moins un poste 24, 26 équipé des moyens 27 de refroidissement en continu sous vide, conduisant au moins à une pré-surgélation des produits.

Autrement dit, ladite installation permet d'introduire en continu les produits à traiter dans une enceinte de traitement dans laquelle on mène au moins une étape de refroidissement en continu (3, 6) dudit produit à traiter pendant un temps donné et sous un vide donné, au cours de laquelle l'évaporation de l'eau libre dudit produit conduit au moins à une pré-surgélation (3) dudit produit, avec maîtrise du pourcentage d'eau congelée.

L'installation de la présente invention peut, en outre, présenter aussi des moyens pour pulvériser lesdits produits permettant leur atomisation.

Dans un premier mode de réalisation, illustré à la figure 2, ladite installation comprend au moins :
- un premier poste équipé de moyens de pré-surgélation sous vide,
- un deuxième poste équipé de moyens de surgélation classique ou sous vide.

Afin de mettre en oeuvre le procédé concerné par la présente invention, l'installation conçue à cette fin est telle qu'illustrée à la figure 2, et constituée d'un réacteur continu 28 présentant un système de dispersion par atomisation 13.

Les temps de surgélation sont de l'ordre de quelques secondes et dépendent de la taille des particules 14.

Comme déjà mentionné précédemment, la réduction des denrées en fines particules par atomisation présente l'avantage de permettre une évaporation de l'eau plus rapide et donc une congélation plus efficace. En cas d'utilisation des produits avec peu d'eau libre, on peut ajouter de l'eau afin de faciliter le processus de congélation.

Le réacteur 27 est alimenté par une pompe 15 qui assure l'étanchéité en amont ; l'étanchéité en aval est assurée par une pompe 16 qui récupère les denrées 17 à leur point de congélation en bas de cuve 18.

Telle qu'illustrée à la figure 2, la pompe 15 alimente un pulvérisateur (non illustré). Ce système présente l'avantage de permettre la maîtrise des temps de chute et de la taille des gouttes 14, et ainsi les temps de congélation.

Selon une autre variante de réalisation, l'installation équipée des moyens de refroidissement en continu 3, 6 sous vide pour la mise en oeuvre du procédé, se présente en outre sous la forme d'un tunnel équipé d'un tapis roulant 19 pour les produits 12.

Tel qu'illustré à la figure 3, le procédé de préparation et de conservation de denrées peut être également appliqué sur les produits feuillus type épinards 12.

A ce sujet, l'installation selon la présente invention peut être qualifiée d'universelle car elle permet de traiter les produits pâteux et/ou visqueux et/ou feuillus et/ou solides dispersés afin d'atteindre pour chacun les pourcentages d'eau congelée désirés en fonction de l'application de mise en forme et des produits traités.

L'enceinte 11 sous vide comprend un tapis 19 à vitesse réglable. Les denrées 12 peuvent être introduites par l'intermédiaire d'un sas 20 gravitairement ou par une pompe qui répartit ledit produit sur le tapis 19.

Dans ce cas, et en l'absence d'atomisation, l'efficacité de la congélation dépend de l'épaisseur des produits 12 et de la vitesse du tapis 19. On peut également ajouter de l'eau aux produits 12.

De la même manière, la sortie de la denrée 12 est réalisée gravitairement par un sas 21 ou par une pompe ou par une vis (non illustrée) afin d'assurer l'étanchéité.

A cet égard, l'installation comporte en outre des moyens pour former des produits à traiter, disposés dans ladite enceinte 11, soit en amont de l'étape de refroidissement, soit en aval de l'étape de pré-surgélation.

Comme dans les cas de denrées décrites plus haut, dans ce cas on obtient aussi une denrée, telle que les pommes duchesse, à son point de congélation qui peut alors être mise en forme dans une formeuse ou dans un moule, ou en extrusion.

En particulier, l'installation permet la mise en oeuvre d'une pré-surgélation rapide, ou « flash », avec maîtrise du pourcentage d'eau congelée desdits produits en vue de leur mise en forme par différents équipements de formage, extrusion, pressage, etc.

Après la mise en forme des produits, les produits sont surgelés de façon classique ou sous vide. La réalisation sous vide de cette dernière étape permet de contrôler une aération du produit induite par l'évaporation de l'eau sous vide. Les formes sont donc déposées sous vide de façon continue.

Selon une autre variante de réalisation, l'installation pour la mise en oeuvre du procédé comprend en outre des moyens d'aspiration afin de créer un vide, des moyens de récupération d'énergie 22 et au moins un sas d'entrée 20 et de sortie 21 desdits produits.

La réalisation du vide présente l'avantage de permettre de récupérer l'énergie. En effet, les étapes de compression permettent d'obtenir de la vapeur à haute température. Celle-ci doit être refroidie avant la seconde étape de compression, on peut donc récupérer cette énergie en utilisant un échangeur 22, tel qu'illustré à la figure 2.

En fonction des compresseurs utilisés pour effectuer le vide, on peut également récupérer la vapeur ou de l'eau chaude au final, tel qu'illustré à la figure 2 par le repère 23. Ces vapeurs ou eau chaude permettent en outre d'alimenter l'amont de la ligne.

Par ailleurs, l'installation de la présente invention inclut des éjecteurs vapeur et des condenseurs à glaces qui permettent d'obtenir une régulation du vide en fonction du pourcentage d'eau congelée, en fonction des produits traités, et qui admet une variation de charge du procédé.

Grâce au procédé et à l'installation de la présente invention, on aboutit à une pré-surgélation de 0 à - 5 °C dans un laps de temps compris entre 0 et 2 minutes, et à une surgélation de 0 à -18 °C en moins de 5 minutes.

Naturellement, d'autres modes de mise en oeuvre, à la portée de l'homme de l'art, auraient pu être envisagés sans pour autant sortir du cadre de l'invention.

## Revendications

1. Procédé de surgélation de produits, tels que des denrées et/ou des produits biologiques, contenant de l'eau libre, tels que des produits liquides et/ou pâteux et/ou visqueux et/ou solides dispersés et/ou feuillus alimentaires, tels que notamment des purées, des épinards hachés, des feuilles d'épinards, des produits en sauce, et/ou des produits en morceaux, **caractérisé par le fait qu'**on effectue au moins une étape de refroidissement en continu (3, 6) dudit produit à traiter pendant un temps donné et sous un vide donné, au cours de laquelle l'évaporation de l'eau libre dudit produit conduit à une pré-surgélation (3) dudit produit, avec maîtrise du pourcentage d'eau congelée, suivie d'une deuxième étape (6) de surgélation, conduisant à une surgélation totale, ladite étape de pré-surgélation étant effectuée à une pression entre 1 et 4 millibars et pendant 10 à 300 secondes.

2. Procédé selon la revendication 1, dans lequel ladite étape de refroidissement en continu (3, 6) conduit à un refroidissement rapide dudit produit.

3. Procédé selon la revendication 1, **caractérisé par le fait que** les denrées sont obtenues à partir d'une purée d'au moins un produit alimentaire, et/ou produit feuillu, et/ou produit biologique à eau libre.

4. Procédé selon la revendication 1, **caractérisé par le fait que** ladite étape de refroidissement (6) conduit à l'obtention d'un produit à au moins -18 °C.

5. Procédé selon la revendication 1, **caractérisé par le fait qu'**après l'étape de pré-surgélation (3), et avant l'étape de surgélation (6), on effectue des adjonctions de morceaux surgelés et/ou d'ingrédients ou denrées.

6. Procédé selon la revendication 1, **caractérisé par le fait que** l'on effectue une mise en forme des denrées après l'étape de pré-surgélation (3) et avant l'étape de surgélation (6).

7. Procédé selon la revendication 1, **caractérisé par le fait que** pendant l'étape (3) de pré-surgélation, on pulvérise les produits à traiter permettant leur atomisation afin de faciliter l'évaporation de l'eau libre, et de diminuer le temps de traitement.

8. Procédé selon la revendication 1, **caractérisé par le fait que** lesdites denrées se présentent en couche d'épaisseur entre 5 mm et 30 mm.

9. Procédé selon la revendication 1, **caractérisé par le fait que** ladite étape de surgélation est effectuée à une pression entre 1 et 4 millibars et pendant 10 à 300 secondes.

10. Procédé selon la revendication 1, **caractérisé par le fait que** lesdites denrées se présentent sous la forme d'un produit visqueux, tels que des purées ou des épinards hachés, et que ladite étape de pré-surgélation (3) est effectuée à une pression entre 3 et 4 millibars et pendant 10 à 180 secondes.

11. Procédé selon la revendication 1, **caractérisé par le fait que** lesdites denrées se présentent sous la forme de produits feuillus entiers et que ladite étape de pré-surgélation (3) est effectuée à une pression entre 3 et 4 millibars et pendant 10 à 180 secondes.

12. Procédé selon la revendication 9, **caractérisé par le fait que** lesdites denrées se présentent sous la forme de produits extrudés, tels que les pommes duchesse, et que ladite étape de surgélation totale (6) est effectué à une pression de 1 millibar et pendant 60 à 300 secondes.

## Patentansprüche

1. Verfahren zur Tiefkühlung von Produkten wie z.B. Lebensmitteln und/oder biologischen Produkten, enthaltend freies Wasser, wie z.B. flüssige und/oder pastöse und/oder visköse und/oder feste verstreute und/oder blattreiche Nahrungsmittelprodukte wie insbesondere Pürees, gehackten Spinat, Spinatblätter, Produkte in Sauce und/oder Produkte in Stücken, **dadurch gekennzeichnet, dass** mindestens ein Schritt des kontinuierlichen Abkühlens (3, 6) des zu behandelnden Produkts während einer gegebenen Zeit und unter einem gegebenen Vakuum durchgeführt wird, in dessen Verlauf die Verdampfung des freien Wassers des Produkts zu einer Vor-Tiefkühlung (3) des Produkts führt, mit einer Kontrolle des Prozentsatzes des gefrorenen Wassers, gefolgt von einem zweiten Schritt (6) des Tiefkühlens, der zu einer vollständigen Tiefkühlung führt, wobei der Schritt des Vor-Tiefkühlens bei einem Druck zwischen 1 und 4 Millibar und während 10 bis 300 Sekunden durchgeführt wird.

2. Verfahren nach Anspruch 1, wobei der Schritt des kontinuierlichen Abkühlens (3, 6) zu einer schnellen Abkühlung des Produkts führt.

3. Verfahren nach Anspruch 1, **dadurch gekennzeichnet, dass** die Lebensmittel auf der Grundlage eines Pürees mindestens eines Nahrungsmittelprodukts und/oder eines blatterreichen Produkts und/oder eines biologischen Produkts mit freiem Wasser erhalten werden.

4. Verfahren nach Anspruch 1, **dadurch gekennzeichnet, dass** der Schritt des Abkühlens (6) zum Erhalt eines Produkts mit mindestens -18 °C führt.

5. Verfahren nach Anspruch 1, **dadurch gekennzeichnet, dass** nach dem Schritt des Vor-Tiefkühlens (3) und vor dem Schritt des Tiefkühlens (6) die Beigabe von tiefgekühlten Stücken und/oder Bestandteilen oder Lebensmitteln durchgeführt wird.

6. Verfahren nach Anspruch 1, **dadurch gekennzeichnet, dass** eine Formung der Lebensmittel nach dem Schritt des Vor-Tiefkühlens (3) und vor dem Schritt des Tiefkühlens (6) durchgeführt wird.

7. Verfahren nach Anspruch 1, **dadurch gekennzeichnet, dass** während des Schritts des Vor-Tiefkühlens (3) die Produkte, die behandelt werden sollen, zerstäubt werden, wodurch ihre Atomisierung ermöglichet wird, um die Verdampfung des freien Wassers zu erleichtern und die Behandlungszeit zu verringern.

8. Verfahren nach Anspruch 1, **dadurch gekennzeichnet, dass** die Lebensmittel eine Schicht mit einer Dicke zwischen 5 mm und 30 mm darstellen.

9. Verfahren nach Anspruch 1, **dadurch gekennzeichnet, dass** der Schritt des Tiefkühlens bei einem Druck zwischen 1 und 4 Millibar und während 10 bis 300 Sekunden durchgeführt wird.

10. Verfahren nach Anspruch 1, **dadurch gekennzeichnet, dass** die Lebensmittel die Form eines viskösen Produkts aufweisen, wie z.B. Pürees oder gehakten Spinat, und dass der Schritt des Vor- Tiefkühlens (3) bei einem Druck zwischen 3 und 4 Millibar und während 10 bis 180 Sekunden durchgeführt wird.

11. Verfahren nach Anspruch 1, **dadurch gekennzeichnet, dass** die Lebensmittel die Form von ganzen blattreichen Produkten aufweisen, und dass der Schritt des Vor-Tiefkühlens (3) bei einem Druck zwischen 3 und 4 Millibar und während 10 bis 180 Sekunden durchgeführt wird.

12. Verfahren nach Anspruch 9, **dadurch gekennzeichnet, dass** die Lebensmittel die Form von extrudierten Produkten aufweisen, wie z.B. Herzoginkartoffeln, und dass der Schritt des vollständigen Tiefkühlens (6) bei einem Druck von 1 Millibar und während 60 bis 300 Sekunden durchgeführt wird.

## Claims

1. Method for deep-freezing products, such as foods and/or biological products, containing free water, such as liquid and/or pasty and/or viscous and/or dispersed solid and/or leafed food products, such as purees, chopped spinach, leafed spinach, products in sauces, and/or products in pieces, **characterised in that** at least one continuous cooling step (3, 6) of said product to be processed is performed for a given time and in a given vacuum, whereby the evaporation of the free water of said product gives rise to pre-deep-freezing (3) of said product, with control of the percentage of frozen water, followed by a second deep-freezing step (6), resulting in complete deep-freezing, said pre-deep-freezing step being performed at a pressure between 1 and 4 millibar and for 10 to 300 seconds.

2. Method according to claim 1, wherein said continuous cooling step (3, 6) gives rise to quick cooling of said product.

3. Method according to claim 1, **characterised in that** the foods are obtained from a puree of at least one food product, and/or leafed product, and/or biological product with free water.

4. Method according to claim 1, **characterised in that** said cooling step (6) results in a product at -18°C at least being obtained.

5. Method according to claim 1, **characterised in that**, after the pre-deep-freezing step (3), and before the deep-freezing step (6), additions of frozen pieces and/or ingredients or foods are made.

6. Method according to claim 1, **characterised in that** the foods are shaped after the pre-deep-freezing step (3) and before the deep-freezing step (6).

7. Method according to claim 1, **characterised in that**, during the pre-deep-freezing step (3), the products to be processed are ground, enabling the atomisation thereof, to facilitate the evaporation of the free water, and reduce the processing time.

8. Method according to claim 1, **characterised in that** said foods are in a layer between 5 mm and 30 mm thick.

9. Method according to claim 1, **characterised in that** said deep-freezing step is performed at a pressure between 1 and 4 millibar and for 10 to 300 seconds.

10. Method according to claim 1, **characterised in that** said foods are in the form of a viscous product, such as purees or chopped spinach, and that said pre-deep-freezing step (3) is performed at a pressure between 3 and 4 millibar and for 10 to 180 seconds.

11. Method according to claim 1, **characterised in that** said foods are in the form of whole leafed products and that said pre-deep-freezing step (3) is performed at a pressure between 3 and 4 millibar and for 10 to 180 seconds.

12. Method according to claim 9, **characterised in that** said foods are in the form of extruded products, such as Duchess potatoes, and that said complete deep-freezing step (6) is performed at a pressure of 1 millibar and for 60 to 300 seconds.
